# EUROPÄISCHE PATENTSCHRIFT

(11) **EP 2 760 164 B1**
(45) Veröffentlichungstag und Bekanntmachung des Hinweises auf die Patenterteilung: **06.03.2019**
(21) Anmeldenummer: 13198566.5
(22) Anmeldetag: 19.12.2013
(51) Int. Cl.: H04L 12/28, H04L 12/24

(54) **Intuitive und selbstlernende Wohn- und Gebäudekomfortsteuerung**
Intuitive and self-learning residential and building comfort control
Commande de confort de logements et de bâtiments intuitive à auto-apprentissage

(30) Priorität: 25.01.2013 DE 102013201214
(43) Veröffentlichungstag der Anmeldung: 30.07.2014
(73) Patentinhaber: HELLA Sonnen- und Wetterschutztechnik GmbH, 9913 Abfaltersbach (AT)
(72) Erfinder: Duracher, Peter, 9920 Sillian (AT); Stanglechner, Manuel, 9990 Debant (AT); Profer, Wolfgang, 3001 Mauerbach (AT)
(74) Vertreter: BRP Renaud & Partner mbB Rechtsanwälte Patentanwälte Steuerberater

(56) Entgegenhaltungen:
- WO-A2-2009/128001
- FR-A1- 2 912 821

## Beschreibung

Die vorliegende Erfindung betrifft ein Steuerungssystem für ein Gebäude.

Steuerungssysteme werden in modernen Gebäuden zunehmend unentbehrlich, um beispielsweise die Temperatur innerhalb von Gebäuden energiesparend auf einem erträglichen Niveau halten zu können. Bekannte Steuerungssysteme weisen üblicherweise zumindest eine Einrichtung, wie beispielsweise einen Rollladen, eine Markise, eine Jalousie/Raffstore oder eine textile Fassadenbeschattung auf, der/die bei Bedarf entweder manuell oder elektrisch in die gewünschte Stellung verfahren wird. Ein derartiges händisches Betätigen bzw. Verstellen der jeweiligen Einrichtung ist aufgrund des stetig steigenden Einzugs von modernen Steuerungssystemen auch im häuslichen Gebrauch nicht mehr zeitgemäß. Werden jedoch moderne Steuerungssysteme für Einrichtungen eingesetzt, so erfordern diese üblicherweise ein hohes technisches Know-how und zwar sowohl hinsichtlich der Installation als auch der Wartung. Insbesondere das hohe technische Know-how macht derartige "intelligente" Steuerungssysteme jedoch insbesondere für Privatpersonen unattraktiv.

Aus der WO 2009/128001 A2 ist ein Steuerungssystem beschrieben, das eine Rechnereinrichtung und mehrere Einrichtungen aufweist, die mit Hilfe einer Installationseinrichtung in das Steuerungssystem eingebunden werden.

Die FR 2 912 821 A1 zeigt ein Steuerungssystem zum Steuern von Beschattungseinrichtungen.

In der US 2011/266345 A1 ist ein Beleuchtungssystem beschrieben, dessen Bestandteile jeweils mit einem zugehörigen RFID-Tag versehen sind.

Die vorliegende Erfindung beschäftigt sich daher mit dem Problem, ein intelligentes Steuerungssystem für ein Gebäude anzugeben, welches automatisiert steuerbar ist und welches trotz eines hohen Automatisierungsgrads trotzdem vergleichsweise einfach installiert bzw. gewartet werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Steuerungssystem für ein Gebäude mit einer zentralen Rechnereinrichtung und mit zumindest einer dezentralen Steuerungseinrichtung auszustatten, wobei der zumindest einen Steuerungseinrichtung wenigstens eine Einrichtung, wie beispielsweise ein Raffstore, eine Beschattungseinrichtung, eine Jalousie, eine Markise oder ein Rollladen, zugeordnet sind. Ebenso kann ein Garagentor, eine Lichtquelle, eine Heizung etc. in dieses System mit eingebunden werden. Die Rechnereinrichtung ist dabei in der Lage, drahtlos oder drahtgebunden mit der Steuerungseinrichtung zu kommunizieren und kann somit möglichst zentral angeordnet werden. Um nun insbesondere die Installation eines derartigen intelligenten und automatisierten Steuerungssystems zu vereinfachen, weist jede Komponente des Steuerungssystems, das heißt beispielsweise die Rechnereinrichtung, die zumindest eine Steuerungseinrichtung sowie die zumindest eine Einrichtung einen Code/Chip, beispielsweise einen Strichcode, einen QR-Code, einen RFID-Chip, einen NFC-Chip, o.ä. auf, über den die jeweilige Komponente mit einem Lesegerät eindeutig identifizierbar und zugleich in das Steuerungssystem einbindbar ist. Das beschriebene Lesegerät kann beispielsweise ein Smartphone oder Tablet-PC, insbesondere ein iPod oder iPad, mit entsprechend installierten Applikationen sein, wobei dieses Lesegerät in der Lage ist, den auf- oder in der jeweiligen Komponente des Steuerungssystems angeordneten Code/Chip zu lesen und diesem die darin hinterlegte Informationen zu entnehmen. RFID-Chips bieten sich hier genauso an wie Strichcodes, da beide eine Fülle an Informationen ohne Energiezufuhr speichern können. Zur Installation des erfindungsgemäßen Steuerungssystems müssen nun zunächst die Rechnereinrichtung, die zumindest eine Steuerungseinrichtung und die zumindest eine Einrichtung mit einer elektrischen Spannungsquelle, beispielsweise einem Netzanschluss, verbunden werden. Vor- oder nach Anlegen der Spannungsversorgung wird auf dem Lesegerät, beispielsweise dem Smartphone, eine entsprechende Lesefunktion (Scan View) gestartet und darüber der auf- oder in jeder Steuerungseinrichtung angeordnete Code/Chip ein- bzw. ausgelesen. Danach kann die jeweilige Komponente sofort benannt werden, beispielsweise "Wohnzimmer Jalousie Terrasse". Auch die zentrale Steuerung, das heißt die Rechnereinrichtung, kann auf diesem Wege erfasst und benannt werden. Der auf der Steuerungseinrichtung gelesene Code/Chip wird nun drahtlos, beispielsweise mittels einer WLAN-Verbindung oder über das Internet, an die Rechnereinrichtung übermittelt und in eine dort hinterlegte Steuerungssoftware eingebunden. Dabei ist denkbar, dass mehrere Steuerungseinrichtungen auf einzelne Räume aufgeteilt oder aber in Gruppen gemeinsam verwaltet werden, beispielsweise Haupt- und Nebengebäude. In einfacher Form können einzelne Einrichtungen bzw. Steuerungseinrichtungen nunmehr auch Räumen bzw. Gruppen hinzugefügt oder von diesen wieder entfernt werden. Der Vorteil dieses erfindungsgemäßen Steuerungssystems liegt insbesondere in der vergleichsweise einfachen aber zugleich eindeutigen Anbindung einzelner Komponenten, das heißt Steuerungseinrichtungen, an die zentrale Rechnereinrichtung, sowie ein Verschlüsselungssystem, das nur gescannte Komponenten steuerbar macht. Hierdurch kann ausgeschlossen werden, dass Steuerungseinrichtungen mit angesteuert werden, die nicht zu dem Steuerungssystem gehören oder aber eine fremde Person Zugriff auf gebäudeinterne Steuerungseinrichtungen erhält. Erfindungsgemäß weist dabei zumindest eine als Beschattungseinrichtung ausgebildete Einrichtung einen Sensor auf, der mit der Steuerungseinrichtung verbunden ist und eine Bewegung eines Behanges der Beschattungseinrichtung erfasst und an die Rechnereinrichtung übermittelt. Dabei ist die Rechnereinrichtung derart ausgebildet, dass eine nicht von ihr, einem Lesegerät oder einem Schalter/Taster initiierte Bewegung der Beschattungseinrichtung erkennt und auf dem Lesegerät beispielsweise einem Smartphone, anzeigt.

Hält der Benutzer das Lesegerät über den Code/Chip der Steuerungseinrichtung und ist zudem die Konfigurationsapplikation, beispielsweise eine Lesesoftware, geöffnet, so wird von dieser der Code/Chip erfasst und über die Applikation ausgewertet. Ist der Code bzw. das vom Chip gesandte Signal ungültig, wird er
nicht weiter verwendet und dem Benutzer dies optisch und/oder akustisch angezeigt. Bei der Erfassung eines gültigen Codes hingegen wird der Benutzer aufgefordert, einen Namen für die jeweilige Komponente, das heißt beispielsweise für die jeweilige Steuerungseinrichtung, zu vergeben, wobei anschließend die Daten mit der zentralen Rechnereinrichtung verknüpft und im Anschluss die jeweilige Steuerungseinrichtung sofort angesteuert werden kann. In dem Code, der beispielsweise als Strichcode, Barcode oder als QR-Code oder aber auch durch ein anderes technologisches Verfahren, wie RFID, NFC, ... ausgebildet ist, kann zumindest eine der nachfolgenden Informationen hinterlegt sein: Art des Geräts (Rechnereinrichtung, Steuerungseinrichtung), Geräteidentifizierungsnummer, Formationen zum Übertragungsprotokoll, eine Netzwerkadresse oder URL (Internetadresse). Mittels dieser Informationen ist nicht nur eine eindeutige Identifizierung der jeweiligen Komponente des Steuerungssystems möglich, sondern zugleich auch eine schnelle und eindeutige Überprüfung, ob die jeweilige Komponente überhaupt in das Steuerungssystem einbindbar ist.

Ein weiterer Vorteil der Verwendung der erfindungsgemäßen Codes/Chips ist die Verschlüsselung des Steuerungssystems. Während des Scanvorgangs müssen sämtliche Komponenten nämlich physisch dem Benutzer vorliegen. Dadurch können nur genau die Komponenten in das Steuerungssystem integriert werden, die der Benutzer aktiv eingescannt hat. Im Umkehrschluss ist es somit auch nicht möglich, dass eine nicht autorisierte Person Zugriff auf das Steuerungssystem oder einzelne Komponenten desselben erhält, oder beispielsweise ein unbeabsichtigter Zugriff durch einen Nachbarn, der dasselbe Steuerungssystem nutzt. Bei Austausch einzelner Komponenten des Steuerungssystems im Servicefall muss lediglich der Code/Chip der ausgetauschten Komponente erfasst werden, wobei die Integration der neuen Komponente in das Steuerungssystem für den Kunden transparent erfolgt.

Bei einer vorteilhaften Weiterbildung der erfindungsgemäßen Lösung ist zumindest eine Steuerungseinrichtung mit einem manuell zu bedienenden Schalter/Taster verbunden, der bei Betätigung eine manuelle Ansteuerung der zugehörigen/jeweiligen Einrichtung ermöglicht. Hierdurch ist es möglich, die Bedienung des Steuerungssystems bzw. einzelner Einrichtungen desselben nicht nur allein über einen Touchscreen, beispielsweise an der Rechnereinrichtung, zu realisieren, sondern auch über handelsübliche Schalter bzw. Taster, die eine einzelne Steuerungseinrichtung direkt ansteuern. Rein theoretisch ist aber selbstverständlich auch eine Bedienung des erfindungsgemäßen Steuerungssystems bzw. eine Steuerung desselben über ein mobiles Endgerät, wie beispielsweise ein Smartphone möglich, wobei über eine entsprechende Anwendung das Gebäude eingesehen und das Steuerungssystem gesteuert werden kann. Bei der Verwendung mehrerer Smartphones können einzelne Benutzer angelegt werden, wobei auch unterschiedliche Zugriffsrechte vergeben werden können, so dass unterschiedlichen Benutzern unter Umständen unterschiedliche Zugriffsmöglichkeiten bereitgestellt werden können. Dabei ist es auch denkbar, dass mittels beispielsweise des Smartphones die jeweiligen Einrichtungen einzeln angesteuert werden können oder aber in einer Gruppe, wobei bei einem Ansteuern der Gruppe nun alle in dieser Gruppe zusammengefassten Einrichtungen in die vorgegebene Position verfahren werden. Dabei können auch unterschiedlichste Einrichtungen, wie beispielsweise Rollläden und Raffstores, in einer Gruppe verwaltet werden, wobei die jeweilige Zielposition dann unabhängig der Eigenschaften der einzelnen Gattungseinrichtungen angefahren wird. Generell kann auch eine ganze Gruppe derartiger Einrichtungen einem einzigen manuellen Schalter bzw. Taster zugewiesen werden. Sind mehrere Einrichtungen in einer gemeinsamen Gruppe zusammengefasst, können individuelle Szenarien abgespeichert werden, die beispielsweise einen gewünschten Ist-Zustand der einzelnen Einrichtungen festhalten. Sobald dieses Szenario auf dem Smartphone bzw. der Rechnereinrichtung gewählt wird, wir nunmehr von dem Steuerungssystem wiederum genau dieser Zustand hergestellt, in welchem die einzelnen in der Gruppe zusammengefassten Einrichtungen ihre vordefinierte Stellung einnehmen. Auch hierbei ist es selbstverständlich möglich, einem manuell zu bedienenden Schalter bzw. Taster ein derartiges Szenario zuzuweisen.

Bei einer weiteren vorteilhaften Ausführungsform der erfindungsgemäßen Lösung ist die Rechnereinrichtung derart ausgebildet, dass sie zumindest eine Steuerungseinrichtung und eine zugehörige Einrichtung zu einem festgelegten Datum bzw. zu einer festgelegten Uhrzeit ansteuert. Über eine derartige "Kalenderfunktion" können unterschiedlichste Einrichtungen, Gruppen oder Szenarien mit einem Datum/oder einer Uhrzeit belegt werden, wobei dann bei Erreichen dieses Datums bzw. bei Erreichen der vordefinierten Uhrzeit die jeweilige Funktion ausgeführt wird. Darüber hinaus sind auch Sonderfunktionen verfügbar, wie beispielsweise Sonnenaufgang und Sonnenuntergang, wobei diese jahreszeitenbedingt über eine Datenbank angepasst werden.

Denkbar ist bei dem erfindungsgemäßen Steuerungssystem auch, dass in der Rechnereinrichtung eine "Leaving Home-Funktion" hinterlegt ist, die gewählt wird, sofern die Bewohner des Gebäudes längere Zeit abwesend, beispielsweise im Urlaub sind. Über die auswählbare Leaving Home-Funktion wird dann die Anwesenheit der Bewohner simuliert, so dass beispielsweise morgens die Rollläden geöffnet und abends geschlossen werden. Dabei kann der Ablauf mehrerer vorab festgelegter Szenarien bezogen auf die Zeit und andere Gegebenheiten gestartet werden.

Bei einer weiteren vorteilhaften Ausführungsform der erfindungsgemäßen Lösung weist das Steuerungssystem einen Komfortsteuerungsmodus auf, in welchem häufig gewählte Stellungen der Einrichtungen mit Datum/Uhrzeit abgespeichert sind, wobei diese Stellungen bei Wahl des Komfortsteuerungsmodus automatisch angefahren werden. Dabei ist das Steuerungssystem prinzipiell in der Lage, diesen Komfortsteuerungsmodus selbst zu erlernen, beispielsweise anhand häufig von den Benutzern des Gebäudes gewählten Stellungen der einzelnen Einrichtungen. Das erfindungsgemäße Steuerungssystem erkennt somit die Gewohnheiten der Benutzer automatisch und kann hieraus den Komfortsteuerungsmodus erstellen. Wird nun der erlernte Komfortsteuerungsmodus aktiviert, übernimmt das intelligente Steuerungssystem von da an die Steuerung der einzelnen Einrichtungen. Selbstverständlich kann der Benutzer jederzeit eingreifen, gewisse Funktionen de- bzw. aktivieren und generell mittels entsprechender Befehle den Komfortsteuerungsmodus übersteuern.

Generell ist mit einer entsprechenden Applikation auch eine Steuerung des Steuerungssystems über eine entsprechende Gestenerkennung denkbar, so dass beispielsweise an einem Bildschirm eines Smartphones die eingegebenen Bewegungen (Gesten) verarbeitet werden und in weiterer Folge einen Befehl zur direkten Steuerung einer jeweiligen Steuerungseinrichtung auslösen können. Die hierfür benötigten einfachen Fingerbewegungen können dabei der jeweiligen Funktion intuitiv zugeordnet sein und sind deshalb leicht zu merken. So kann beispielsweise ein auf dem Smartphone abgebildeter Rollladen hoch oder runter geschoben werden. Die Befehle zur Steuerung der jeweiligen Steuerungseinrichtung bzw. Einrichtung werden dabei nahezu in Echtzeit ausgeführt und zugleich der Status der jeweiligen Einrichtung an den Benutzer zurückgemeldet. Es ist somit möglich, die tatsächliche Situation (Position beispielsweise eines Rollladens) auf einem Display graphisch nachzubilden bzw. anzuzeigen.

Die Erfindung beruht weiter auf dem allgemeinen Gedanken, das zuvor beschriebene intelligente Steuerungssystem mittels entsprechender Codes/Chips einfach installieren bzw. gegebenenfalls warten und anpassen zu können. Zur erfindungsgemäßen einfachen Installation werden zunächst die Rechnereinrichtung, zumindest eine Steuerungseinrichtung und zumindest eine Einrichtung mit einer elektrischen Spannungsquelle, beispielsweise einem elektrischen Netz, verbunden. Vor- oder nach Anlegen der Spannungsversorgung wird auf einem Lesegerät, beispielsweise einem Smartphone, eine Lesefunktion gestartet, um dann den auf jeder Steuerungseinrichtung angeordneten Code/Chip ein-/auslesen und diesem einen Namen zuordnen zu können. Zuvor oder anschließend wird der auf der Rechnereinrichtung angeordnete Code/Chip ein-/ausgelesen und die gelesenen Informationen der Steuerungseinrichtung drahtlos, beispielsweise mittels WLAN oder Internet, an die Rechnereinrichtung übermittelt und in eine dort hinterlegte Steuerungssoftware eingebunden. Über den Code, der beispielsweise als Barcode oder als QR-Code oder ein anderes technologisches Verfahren wie RFID, NFC, ...ausgebildet ist, können die einzelnen Komponenten des Steuerungssystems informationstechnisch kommunizierend miteinander verbunden werden, wobei lediglich solche Komponenten miteinander kommunizieren, die im Konfigurations- bzw. Installationsprozess gemeinsam erfasst wurden. Hierdurch kann die Sicherheit insbesondere gegen einen unerlaubten Zugriff von außen, deutlich gesteigert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen möglichen Aufbau eines erfindungsgemäßen Steuerungssystems für ein Gebäude,
- Fig. 2a-i: einzelne Schritte zur Installation eines derartigen Steuerungssystems.

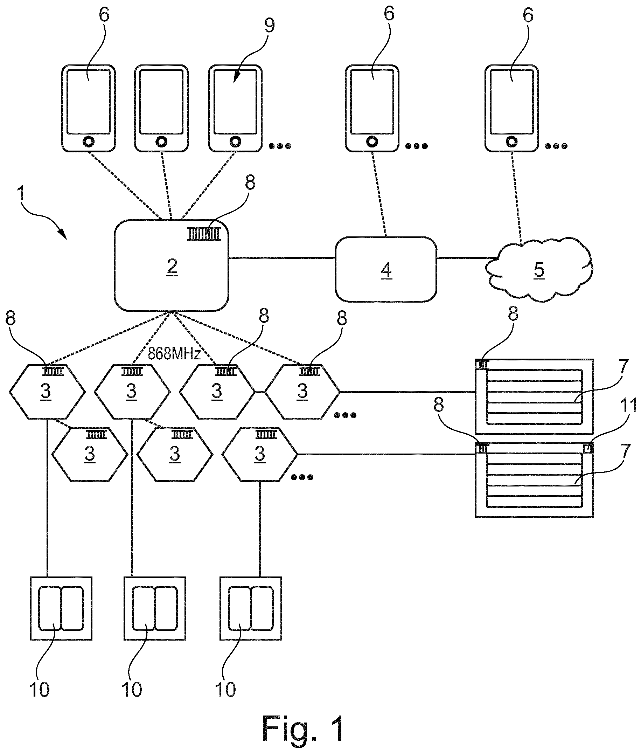

Entsprechend der Figur 1, weist ein erfindungsgemäßes Steuerungssystem 1 für ein Gebäude eine zentrale Rechnereinrichtung 2 sowie mehrere Steuerungseinrichtungen 3 auf. Die zentrale Rechnereinrichtung 2 kann dabei beispielsweise über ein Modem 4 bzw. einen Router mit dem Internet 5 verbunden sein. Denkbar ist selbstverständlich auch eine direkte drahtlose Anbindung an beispielsweise ein Smartphone 6 via WLAN. Zwei der in Figur 1 gezeigten Steuerungseinrichtungen 3 sind dabei mit jeweils einer Einrichtung 7 derart verbunden, dass die Einrichtung 7 von der Steuerungseinrichtung 3 ansteuerbar und insbesondere verstellbar ist. Unter dem Begriff "Einrichtung 7" kann beispielsweise ein Rollladen, eine Markise, eine Jalousie/Raffstore oder eine textile Fassadenbeschattung, aber auch eine Leuchtquelle, ein Garagentor oder eine Heizung verstanden werden. Eine Kommunikation zwischen der Rechnereinrichtung 2 und der zumindest einen Steuerungseinrichtung 3 erfolgt dabei drahtlos oder drahtgebunden, beispielsweise über eine IP-Verbindung. Erfindungsgemäß weist nun jede Komponente des Steuerungssystems 1, das heißt beispielsweise die Rechnereinrichtung 2, die Steuerungseinrichtungen 3 und die Einrichtungen 7, einen Code/Chip 8 auf, über welchen die jeweilige Komponente 2,3,7 mit einem Lesegerät 9, beispielsweise einem Smartphone 6, eindeutig identifizierbar und in das Steuerungssystem 1 einbindbar ist.

Der Code/Chip 8 kann dabei als Barcode bzw. als Strichcode oder aber als QR-Code (Quick Response), sowie durch ein anderes technologisches Verfahren (RFID, NFC, ...) ausgebildet sein und darüber hinaus zumindest eine der nachfolgenden Informationen beinhalten: Art des Geräts (Rechnereinrichtungen 2, Steuerungseinrichtungen 3, Einrichtung 7), Geräteidentifizierungsnummer, Informationen zum Übertragungsprotokoll, Netzwerkadresse oder URL (Internetadresse). Ebenfalls Bestandteil des erfindungsgemäßen Steuerungssystems 1 sein kann ein manuell zu bedienender Schalter/Taster 10, der mit einer zugehörigen Steuerungseinrichtung 3 verbunden ist und der bei Betätigung eine manuelle Ansteuerung der mit der jeweiligen Steuerungseinrichtung 3 kommunizierend verbundenen Einrichtung 7 ermöglicht. Die Steuerungseinrichtung 3 ist dabei nicht nur zur Ansteuerung jeweils einer einzelnen Einrichtung 7 ausgebildet, sondern kann selbstverständlich auch eine Gruppe von unterschiedlichen zusammengefassten Einrichtungen 7 ansteuern. Die drahtlose oder drahtgebundene Kommunikation zwischen der Rechnereinrichtung 2 und den Steuerungseinrichtungen 3 kann darüber hinaus verschlüsselt erfolgen, wodurch das erfindungsgemäße Steuerungssystem 1 in besonderer Weise vor einem unerwünschten Zugriff nicht autorisierter Dritter geschützt ist.

Die Rechnereinrichtung 2 kann darüber hinaus derart ausgebildet sein, dass sie zumindest eine Steuerungseinrichtung 3 und eine zugehörige Einrichtung 7 zu einem festgelegten Datum bzw. zu einer festgelegten Uhrzeit ansteuert, was in einer sogenannten Kalenderfunktion hinterlegt werden kann. Darüber hinaus das Steuerungssystem 1 einen Komfortsteuerungsmodus aufweisen, in welchem häufig gewählte Stellungen der Einrichtungen 7 mit Datum/Uhrzeit abgespeichert sind, so dass diese Stellungen bei Wahl des Komfortsteuerungsmodus automatisch angefahren werden. Das Steuerungssystem 1 erkennt dabei die Gewohnheiten der Benutzer automatisch und ist in der Lage, hieraus einen Modus, nämlich den Komfortsteuerungsmodus, zu erstellen. Der Benutzer kann diesen Komfortsteuerungsmodus nach einer gewissen Einlernzeit aktivieren, so dass ab diesem Zeitpunkt das erfindungsgemäße Steuerungssystem 1 die Steuerung der einzelnen Einrichtungen 7 übernimmt. Selbstverständlich ist der Benutzer dabei jederzeit zu einer Interaktion in der Lage und kann darüber hinaus den Komfortsteuerungsmodus übersteuern, so dass er stets Herr des Verfahrens ist.

Durch die Verwendung des erfindungsgemäß an jeder Komponente angeordneten Codes/Chips 8 ist eine Verschlüsselung des Systems gewährleistet, was zur Installation des erfindungsgemäßen Steuerungssystems 1 voraussetzt, dass alle Komponenten in physischer Form dem Benutzer vorliegen müssen. Dadurch können nur genau diejenigen Komponenten in das Steuerungssystem 1 integriert werden, die der Benutzer aktiv gescannt hat. Im Umkehrschluss ist es auch nicht möglich, dass eine nicht autorisierte Person Zugriff auf das Steuerungssystem 1 oder einzelne Einrichtungen 7 erhält. Ebenso unmöglich ist ein unbeabsichtigter Zugriff durch einen Nachbarn, welcher dasselbe Steuerungssystem 1 verwendet. Beim Tausch einzelner Komponenten im Servicefall muss lediglich der Code/Chip 8 der ausgetauschten Komponenten 2, 3, 7 erfasst werden.

Mit dem erfindungsgemäßen Steuerungssystem 1 ist auch die Abspeicherung unterschiedlicher Szenarien, das heißt unterschiedlicher Ist-Zustände einzelner oder mehrerer Einrichtungen 7 möglich, die in ihren jeweiligen Stellungen dann als entsprechendes Szenario abgespeichert werden. Über das Lesegerät 9 bzw. das Smartphone 6 bzw. den Taster/Schalter 10 kann dann dieses Szenario wieder aktiviert werden.

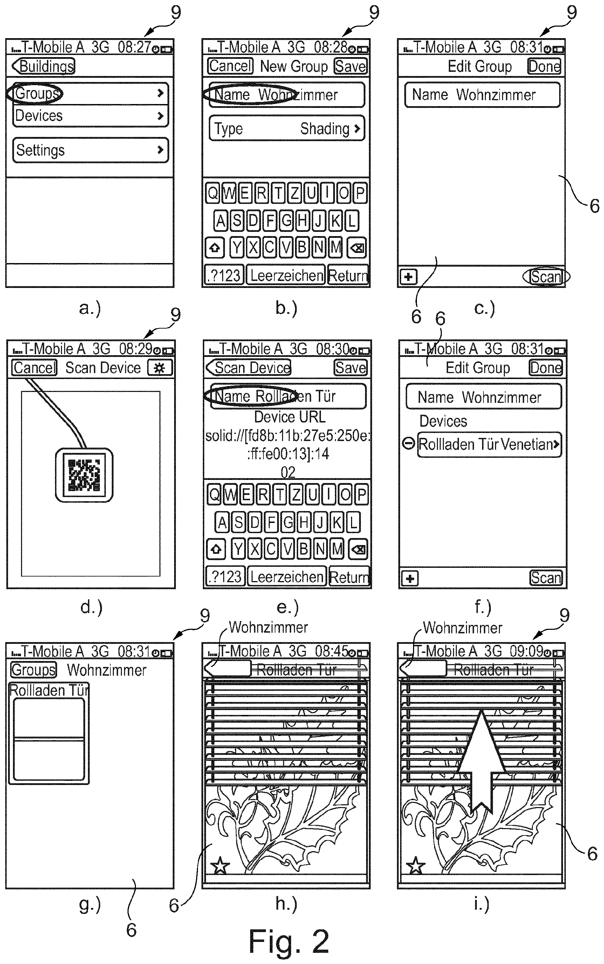

In Figur 2 ist in einzelnen Verfahrensschritten a.) bis i.) die Installation des erfindungsgemäßen Steuerungssystems 1 beschrieben. Zur Vorbereitung der Installation werden dabei zunächst die Rechnereinrichtung 2, die zumindest eine Steuerungseinrichtung 3 und zumindest eine Einrichtung 7 mit einer elektrischen Spannungsquelle, beispielsweise einer Batterie oder einem elektrischen Netz, verbunden. Vor- oder nach Anlegen der Spannungsversorgung kann im Verfahrensschritt a.) auf einem Lesegerät 9, beispielsweise einem Smartphone 6, eine Gruppe ausgewählt werden, in welche die spätere Steuerungseinrichtung 3 aufgenommen werden soll. Dieser Gruppe wird im Verfahrensschritt c.) ein Name, beispielsweise "Wohnzimmer", zugeordnet. Anschließend wird eine Lesefunktion, beispielsweise mittels einer Applikation im Verfahrensschritt d.) aktiviert, woraufhin der Code/Chip 8 der jeweiligen Steuerungseinrichtung 3 eingescannt wird. Diesem eingescannten Code/Chip 8 wird nun der Name vorzugsweise der damit in Verbindung stehenden Einrichtung 7 zugewiesen, was im Verfahrensschritt e.) erfolgt. In diesem Fall erhält die Steuerungseinrichtung 3 den Namen "Rollladen Tür". Selbstverständlich muss auch noch der auf oder in der Rechnereinrichtung 2 angeordnete Code/Chip 8 ein-/ausgelesen werden, was vor dem Verfahrensschritt e.) oder danach erfolgen kann, wobei der zuvor an den Steuerungseinrichtungen 3 eingelesene Code/Chip 8 drahtlos, beispielsweise mittels des Internets 5, an die Rechnereinrichtung 2 übermittelt und in eine Steuerungssoftware eingebunden wird. Dies ist im Verfahrensschritt f.) erfolgt. Im Verfahrensschritt g.) kann nun die Stellung der jeweiligen Einrichtung 7 visuell dargestellt werden. Um nun ein möglichst einfaches und komfortables Steuern des Rollladens an der Tür im Wohnzimmer zu ermöglichen, bedient sich das Smartphone 6 bzw. eine darauf entsprechend abgespeicherte Applikation einer Geste, so dass der in den Verfahrensschritte h.) und i.) gezeichnete Rollladen zum Öffnen einfach mittels des Fingers nach oben geschoben wird, wie dies in Figur 2i.) dargestellt ist. Die einfachen Fingerbewegungen sind dabei der jeweiligen gewünschten Ausführungsfunktion intuitiv zugeordnet und dadurch leicht zu merken. Da die mittels des Smartphones 6 an die Rechnereinrichtung 2 übermittelten Befehle nahezu in Echtzeit umgesetzt werden ist auch eine Rückmeldung in Echtzeit auf das Smartphone 6 und damit eine Visualisierung für den Benutzer in Echtzeit möglich.

In das erfindungsgemäße Steuerungssystem 1 sind selbstverständlich zusätzlich zu den oder an Stelle der Einrichtungen 7 alle gängigen Sonnen- und Wetterschutzprodukte, wie beispielsweise Jalousien und Raffstoren, Rollläden (Aufsatzrollläden, Vorbaurollläden), Markisen, Wintergartenbeschattungen und Unterglasmarkisen, Fassadenbeschattungen (Fassadenmarkisen, Vorbaubeschattungen - mit textilen Behängen), Fassaden - ZIP Anlagen, Insektenschutzsysteme, elektrisch betriebene Vertikaljalousien und Plissees, inkl. integrierbare Wetterstationen (Regen, Licht, Wind), Garagentore, Lampen, Heizung, etc. integrierbar und über das Steuerungssystem 1 steuerbar.

Von besonderem Vorteil bei dem erfindungsgemäßen Steuerungssystem 1 ist, dass über die einzelnen Codes/Chips 8 eine eindeutige Identifizierung der jeweiligen Komponenten des Steuerungssystems 1 möglich ist, was nicht nur eine leichte Installation und einfache Wartung ermöglicht, sondern darüber hinaus einen unerwünschten Zugriff von außen verhindert. Die Einrichtungen 7 können darüber hinaus bei der ersten Inbetriebnahme des Steuerungssystems 1 eigenständig in ihre Endposition fahren und diese abspeichern, so dass das Steuerungssystem 1 samt der darin eingebundenen Einrichtungen 7 sofort betriebsbereit sind. Zum Austausch der jeweiligen Komponente 2, 3, 7 muss diese lediglich über den entsprechenden Code/Chip 8 abgemeldet oder aus einer Liste mittels Smartphone 6 gelöscht und eine neue Austauschkomponente über einen neuen Code/Chip 8 angemeldet werden. Generell besitzt das erfindungsgemäße Steuerungssystem 1 auch die Fähigkeit, automatische Korrekturen bei mechanischen Längenveränderungen eines Behanges einer Beschattungseinrichtung (z.B. Setzen des Behanges durch Alterung) vornehmen zu können. Das Steuerungssystem 1 ist hierbei in der Lage mechanische Längenkorrekturen automatisch zu erkennen und in die Steuerungssoftware einfließen zu lassen. Dadurch ist es nicht mehr nötig, nach einer mechanischen Veränderung des Behanges (durch z.B. Federelemente) diese Veränderung der Steuerungseinrichtung 3 bzw. der Rechnereinrichtung 2 mitzuteilen, trotzdem ist eine korrekte Visualisierung und Positionierung der Beschattungseinrichtungen problemlos möglich. Technisch gelöst wird dies durch die Erkennung der mechanischen Endlagen des Antriebes mittels der Steuerungseinrichtungen 3.

Das Steuerungssystem 1 ist zudem in der Lage unmittelbar nach dem Einlesen des Codes/Chips 8 und dem Benennen der Steuerungseinrichtungen 3 bzw. deren Gruppierung ein vollwertig bedienbares Netzwerk automatisch zu formen, welches für die Standardbedienung keine nachträgliche Konfiguration mehr erfordert. Dies bedeutet, dass kein zusätzlicher Konfigurationsaufwand nach dem Einlesen des Codes/Chips 8 und dem Benennen der Steuerungseinrichtungen 3 mehr erforderlich ist, sondern eine entsprechend konfigurierte Software die automatische Einbindung in das Netzwerk übernimmt.

Zum Einsatz des Steuerungssystems 1 als Alarmanlage kann zudem ein Sensor 11 in der Beschattungseinrichtung verbaut sein, der mit der Steuerungseinrichtung 3 verbunden ist und eine Bewegung des Behanges der Beschattungseinrichtung erfasst. Erkennt dabei die zentrale Rechnereinrichtung 2, dass es sich um eine unplanmäßige Bewegung handelt, die nicht von der Rechnereinrichtung 2 oder einem der Bediengeräte, z. B. Smartphone 6 oder Schalter/Taster 10, ausgelöst wurde, wird dies dem Benutzer optisch/ akustisch mitgeteilt und dieser dadurch über einen möglichen Einbruch informiert. In einer weiteren Variante kann daran gedacht sein, dass in diesem Fall die Rechnereinrichtung 2 selbstständig eine Sicherheitsfirma informiert.

Zumindest zwei Einrichtungen (7), insbesondere Beschattungseinrichtungen, Rollladen, Markisen, Jalousien/Raffstores, textile Fassadenbeschattungen, etc., können darüber hinaus auf dem Lesegerät (9), insbesondere auf dem Display eines Smartphones (6), in unterschiedlicher Farbe angezeigt werden, um eine Zugehörigkeit zu z.B. einer Gruppe visuell leicht darstellen zu können. Hierdurch wird die Zuordenbarkeit farblich unterstützt und damit leichter.

## Patentansprüche

1. Steuerungssystem (1) für ein Gebäude,
- mit einer zentralen Rechnereinrichtung (2),
- mit zumindest einer Steuerungseinrichtung (3),
- mit zumindest einer von der Steuerungseinrichtung (3) ansteuerbaren Einrichtung (7), wie beispielsweise einem Rollladen, einer Markise, einer Jalousie/Raffstore, einer textilen Fassadenbeschattung, und/oder einem Insektenschutzsystem, einem Garagentor, einer Lampe oder einer Heizung, wobei die Rechnereinrichtung (2) drahtlos oder drahtgebunden mit der zumindest einen Steuerungseinrichtung (3) kommuniziert,
- wobei jede Komponente des Steuerungssystems (1), das heißt beispielsweise die Rechnereinrichtung (2) und/oder die Steuerungseinrichtung(en) (3), einen Code/Chip (8) aufweist, über welchen die jeweilige Komponente (2,3) mit einem Lesegerät (9) eindeutig identifizierbar und in das Steuerungssystem (1) einbindbar ist,
**dadurch gekennzeichnet,**
- **dass** zumindest eine als Beschattungseinrichtung ausgebildete Einrichtung (7) einen Sensor (11) aufweist, der mit der Steuerungseinrichtung (3) verbunden ist und eine Bewegung eines Behanges der Beschattungseinrichtung erfasst und an die Rechnereinrichtung (2) übermittelt,
- **dass** die Rechnereinrichtung (2) derart ausgebildet ist, dass sie eine nicht von ihr, einem Lesegerät (9) oder einem Schalter/Taster (10) initiierte Bewegung der Beschattungseinrichtung erkennt und auf dem Lesegerät (9), beispielsweise einem Smartphone (6), anzeigt.

2. Steuerungssystem nach Anspruch 1,
**dadurch gekennzeichnet,**
**dass** der Code/Chip (8) ein Strichcode, ein QR-Code oder ein RFID-Code ist, in welchem zumindest eine der nachfolgenden Informationen hinterlegt ist,
- Art des Geräts (Rechnereinrichtung (2), Steuerungseinrichtung (3), Einrichtung (7)),
- Geräteidentifizierungsnummer,
- Informationen zum Übertragungsprotokoll,
- Netzwerkadresse,
- URL (Internetadresse).

3. Steuerungssystem nach Anspruch 1 oder 2,
**dadurch gekennzeichnet,**
**dass** zumindest eine Steuerungseinrichtung (3) mit einem manuell zu bedienenden Schalter/Taster (10) verbunden ist, der bei Betätigung eine manuelle Ansteuerung der zugehörigen oder zugewiesenen Einrichtung (7) ermöglicht.

4. Steuerungssystem nach einem der Ansprüche 1 bis 3,
**dadurch gekennzeichnet,**
**dass** das Lesegerät (9) zum Lesen der Codes (8) ein Smartphone (6), ein iPod touch oder ein Tablet-PC ist.

5. Steuerungssystem nach einem der vorhergehenden Ansprüche,
**dadurch gekennzeichnet,**
**dass** eine Steuerungseinrichtung (3) in Kombination mit einer Rechnereinrichtung (2) zum Ansteuern einer ganzen Gruppe von Einrichtungen (7) ausgebildet ist.

6. Steuerungssystem nach einem der vorhergehenden Ansprüche,
**dadurch gekennzeichnet,**
**dass** die Rechnereinrichtung (2) und die zumindest eine Steuerungseinrichtung (3) zur verschlüsselten, drahtlosen oder drahtgebundenen Datenübertragung ausgebildet sind.

7. Steuerungssystem nach einem der vorhergehenden Ansprüche,
**dadurch gekennzeichnet,**
**dass** die Rechnereinrichtung (2) derart ausgebildet ist, dass sie zumindest eine Steuerungseinrichtung (3) und eine zugehörige Einrichtung (7) zu einem festgelegten Datum bzw. zu einer festgelegten Uhrzeit ansteuert.

8. Steuerungssystem nach einem der vorhergehenden Ansprüche,
**dadurch gekennzeichnet,**
**dass** das Steuerungssystem (1) einen Komfortsteuerungsmodus aufweist, in welchem häufig gewählte Stellungen der Einrichtungen (7) mit Datum/Uhrzeit abgespeichert sind, so dass diese Stellungen bei Wahl des Komfortsteuerungsmodus automatisch angefahren werden.

9. Steuerungssystem nach Anspruch 8,
**dadurch gekennzeichnet,**
**dass** das Steuerungssystem (1) so ausgebildet ist, dass es häufig gewählte Stellungen der Einrichtungen (7) mit Datum/Uhrzeit im Komfortsteuerungsmodus abspeichert und sich so die Gewohnheiten der Benutzer merkt.

## Claims

1. Control system (1) for a building,
- having a central computer device (2),
- having at least one control device (3),
- having at least one device (7) able to be actuated by the control device (3), such as for example a roller shutter, an awning, a blind/Venetian blind, a textile façade shading, and/or an insect protection system, a garage door, a lamp or a heater, wherein the computer device (2) communicates wirelessly or in a wired manner with the at least one control device (3),
- wherein each component of the control system (1), i.e. for example the computer device (2) and/or the control device(s) (3) has a code/chip (8) by means of which the respective component (2, 3) is unambiguously identifiable with a reader device (9) and can be linked into the control system (1),
**characterised in**
- **that** at least one device (7) designed as a shading device has a sensor (11) which is connected with the control device (3) and detects a movement of a curtain of the shading device and transmits it to the computer device (2),
- **that** the computer device (2) is configured such that it recognises a movement of the shading device not initiated by it, a reader device (9) or a switch/button (10) and displays it on the reader device (9), for example a smartphone (6).

2. Control system according to claim 1,
**characterised in**
**that** the code/chip (8) is a barcode, a QR code or an RFID code, in which at least one of the following items of information is stored,
- type of the device (computer device (2), control device (3), device (7)),
- device identification number,
- information regarding the transmission protocol,
- network address,
- URL (internet address).

3. Control system according to claim 1 or 2,
**characterised in**
**that** at least one control device (3) is connected with a switch/button (10) which is to be actuated manually, which when actuated facilitates a manual controlling of the associated or assigned device (7).

4. Control system according to any of claims 1 to 3,
**characterised in**
**that** the reader device (9) for reading the code (8) is a smartphone (6), an iPod touch or a tablet PC.

5. Control system according to any of the preceding claims,
**characterised in**
**that** a control device (3) is designed in combination with a computer device (2) to activate an entire group of devices (7).

6. Control system according to any of the preceding claims,
**characterised in**
**that** the computer device (2) and the at least one control device (3) is configured for the encrypted, wireless or wired transmission of data.

7. Control system according to any of the preceding claims,
**characterised in**
**that** the computer device (2) is configured such that it actuates at least one control device (3) and one associated device (7) on a fixed date or at a fixed time.

8. Control system according to any of the preceding claims,
**characterised in**
**that** the control system (1) has a comfort control mode, in which frequently selected positions of the devices (7) are saved together with date/time, such that these positions are automatically adopted when the comfort control mode is selected.

9. Control system according to claim 8,
**characterised in**
**that** the control system (1) is configured such that it saves frequently selected positions of the devices (7) together with date/time in the comfort control mode and thus recalls the habits of the users.

## Revendications

1. Système de commande (1) pour un bâtiment,
- avec un dispositif informatique central (2),
- avec au moins un dispositif de commande (3),
- avec au moins un dispositif (7) pouvant être commandé par le dispositif de commande (3), comme par exemple un volet roulant, une marquise, un store vénitien/store à lamelles, un ombrage de façade textile, et/ou une moustiquaire, une porte de garage, une lampe ou un chauffage, dans lequel le dispositif informatique (2) communique sans fil ou par fil avec l'au moins un dispositif de commande (3),
- dans lequel chaque composant du système de commande (1), autrement dit par exemple le dispositif informatique (2) et/ou le(s) dispositif(s) de commande (3) présente un code/puce (8), par le biais duquel le composant respectif (2, 3) est clairement identifiable avec un lecteur (9) et intégrable dans le système de commande (1),
**caractérisé en ce**
- **qu'**au moins un dispositif (7) réalisé en tant que dispositif d'ombrage présente un capteur (11), qui est relié au dispositif de commande (3) et détecte un mouvement d'un rideau du dispositif d'ombrage et le transmet au dispositif informatique (2),
- **que** le dispositif informatique (2) est réalisé de sorte qu'il détecte un mouvement du dispositif d'ombrage non initié par lui, un lecteur (9) et/ou un interrupteur/bouton-poussoir (10) et l'affiche sur un lecteur (9), par exemple un smartphone (6).

2. Système de commande selon la revendication 1,
**caractérisé en ce**
**que** le code/puce (8) est un code-barres, un code QR ou un code RFID, dans lequel au moins une des informations suivantes est enregistrée,
- type d'appareil (dispositif informatique (2), dispositif de commande (3), dispositif (7)),
- numéro d'identification de l'appareil,
- informations sur le protocole de transmission,
- adresse réseau,
- URL (adresse Internet).

3. Système de commande selon la revendication 1 ou 2,
**caractérisé en ce**
**qu'**au moins un dispositif de commande (3) est relié à un interrupteur/bouton-poussoir (10) à commande manuelle, qui permet en cas d'actionnement une commande manuelle du dispositif (7) correspondant ou attribué.

4. Système de commande selon l'une quelconque des revendications 1 à 3,
**caractérisé en ce**
**que** le lecteur (9) pour la lecture des codes (8) est un smartphone (6), un iPod touch ou une tablette.

5. Système de commande selon l'une quelconque des revendications précédentes,
**caractérisé en ce**
**qu'**un dispositif de commande (3) est réalisé en combinaison avec un dispositif informatique (2) pour la commande d'un groupe entier de dispositifs (7).

6. Système de commande selon l'une quelconque des revendications précédentes,
**caractérisé en ce**
**que** le dispositif informatique (2) et l'au moins un dispositif de commande (3) sont réalisés pour une transmission de données cryptée, sans fil ou filaire.

7. Système de commande selon l'une quelconque des revendications précédentes,
**caractérisé en ce**
**que** le dispositif informatique (2) est réalisé de sorte qu'il commande au moins un dispositif de commande (3) et un dispositif correspondant (7) à une date fixée ou à une heure fixée.

8. Système de commande selon l'une quelconque des revendications précédentes,
**caractérisé en ce**
**que** le système de commande (1) présente un mode de commande confort, dans lequel les positions fréquemment sélectionnées des dispositifs (7) sont enregistrées avec date/heure de sorte que ces positions sont automatiquement atteintes lors de la sélection du mode de commande confort.

9. Système de commande selon la revendication 8,
**caractérisé en ce**
**que** le système de commande (1) est réalisé de sorte qu'il enregistre les positions fréquemment sélectionnées des dispositifs (7) avec date/heure dans le mode de commande confort et se rappelle ainsi des habitudes des utilisateurs.
